# EUROPÄISCHE PATENTANMELDUNG

(11) **EP 1 283 171 A1**
(43) Veröffentlichungstag der Anmeldung: **12.02.2003**
(21) Anmeldenummer: 02015118.9
(22) Anmeldetag: 06.07.2002
(51) Int. Cl.: B65B 21/12, B25J 15/06, B65B 21/18

(54) **Greifer für eine Vorrichtung zum Umsetzen von grossvolumigen Flaschen sowie Vorrichtung mit einem Greifer**

(30) Priorität: 10.08.2001 DE 20112962 U
(71) Anmelder: R S T Roboter-System-Technik GmbH, 93092 Barbing (DE)
(72) Erfinder: Gau, Georg, 93083 Obertranbling (DE)
(74) Vertreter: Graf, Helmut, Dipl.-Ing.

(57) **Zusammenfassung**

Ein Greifer für eine Vorrichtung zum Umsetzen von großvolumigen, mit einem flüssigen Füllgut gefüllten Flaschen (2) vorzugsweise Fünf-Gallonen-Flaschen ist gekennzeichnet durch wenigstens einen Greiferkopf (11) mit einer zu einer Vorderseite des Greifers sich öffnenden Greiferkopföffnung (12), mit einer Klemmvorrichtung (14,15) zum Festklemmen jeweils einer Flasche (2) an einem Flaschenhals (2³) , sowie mit wenigstens einem radial gegenüber einer Greiferkopfachse (AGK) versetzt angeordneten elastischen und mit Unterdruck beaufschlagbaren Sauger oder Vakuumhalter (16) in der Greiferkopföffnung (12) zum Halten der jeweiligen Flasche (2) an der Flaschenschulter (2²).

## Beschreibung

Die Erfindung bezieht sich auf einen Greifer gemäß Oberbegriff Patentanspruch 1 sowie auf eine Vorrichtung gemäß Oberbegriff Patentanspruch 10.

In jüngster Zeit kommen zunehmend großvolumige, aus einem glasklaren Kunststoff (PET) gefertigte Flaschen, d.h. Fünf-Gallonen-Flaschen zum Einsatz, und zwar für stilles oder nahezu stilles Mineral- oder Tafelwasser. Diese Flaschen sind hauptsächlich für Automaten oder Spender gedacht, die sich zunehmend in Ladengeschäften, Banken und anderen Wirtschaftsunternehmen finden.

Nach dem Füllen mit dem flüssigen Füllgut, d.h. mit dem Mineral- oder Tafelwasser und nach dem Verschließen und Etikettieren müssen die bis dahin aufrecht stehend angeordneten Flaschen für die weitere Lagerung und den Transport in waagrechter Lage in einem Transport- und Lagergestell (Rack) angeordnet werden. Wegen des großen Volumens (fünf Gallonen entsprechen etwa 20 Liter) und wegen des hieraus resultierenden hohen Gewichts ist das hierfür notwendige Handhaben der gefüllten Flaschen nicht unproblematisch, insbesondere auch deswegen, weil das für die Flaschen verwendete Kunststoffmaterial (PET) nur eine begrenzte Festigkeit aufweist.

Aufgabe der Erfindung ist es, einen Greifer aufzuzeigen, mit dem ein schonendes Umsetzen großvoluminger Flaschen möglich ist. Zur Lösung dieser Aufgabe ist ein Greifer entsprechend dem Patentanspruch 1 und eine Vorrichtung entsprechend dem Patentanspruch 10 ausgebildet.

Mit der Erfindung ist ein schonendes Greifen und Umsetzen von großvolumigen, gefüllten Flaschen, insbesondere auch von Fünf-Gallonen-Flaschen aus PET möglich. Weiterbildungen der Erfindung sind Gegenstand der Unteransprüche.

Die Erfindung wird im Folgenden anhand der Figuren an Ausführungsbeispielen näher erläutert. Es zeigen:
- Fig. 1: in Seitenansicht eine Vorrichtung gemäß der Erfindung zum Umsetzen von Wasserflaschen zwischen einem Transporteur und einem Transportgestell (Reck) für diese Flaschen;

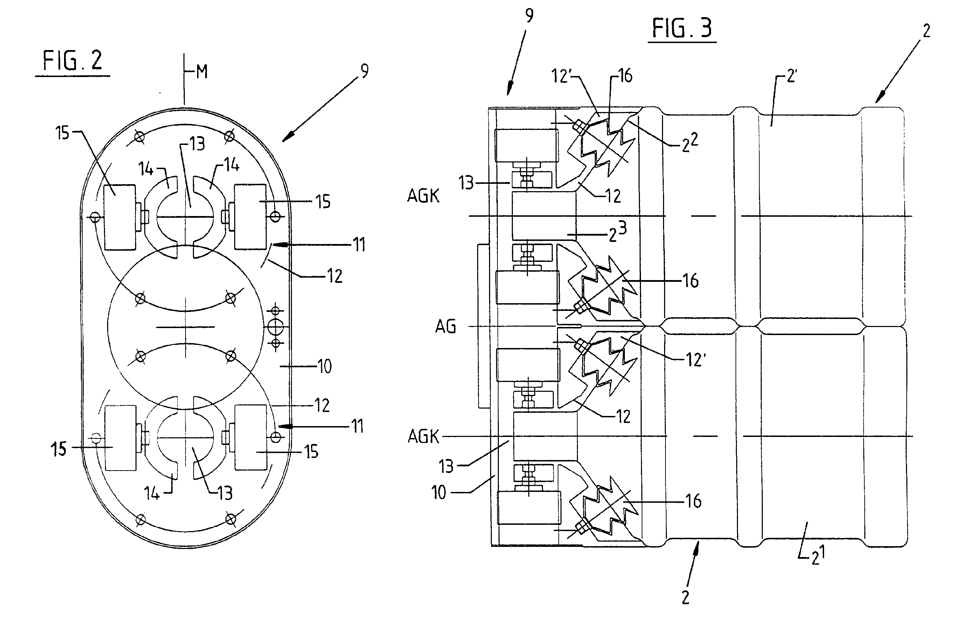

- Fig. 2: und 3 in Einzeldarstellung und in Rückansicht sowie in Schnittdarstellung einen zwei Köpfe aufweisenden Greifer der Vorrichtung der Figur 1;

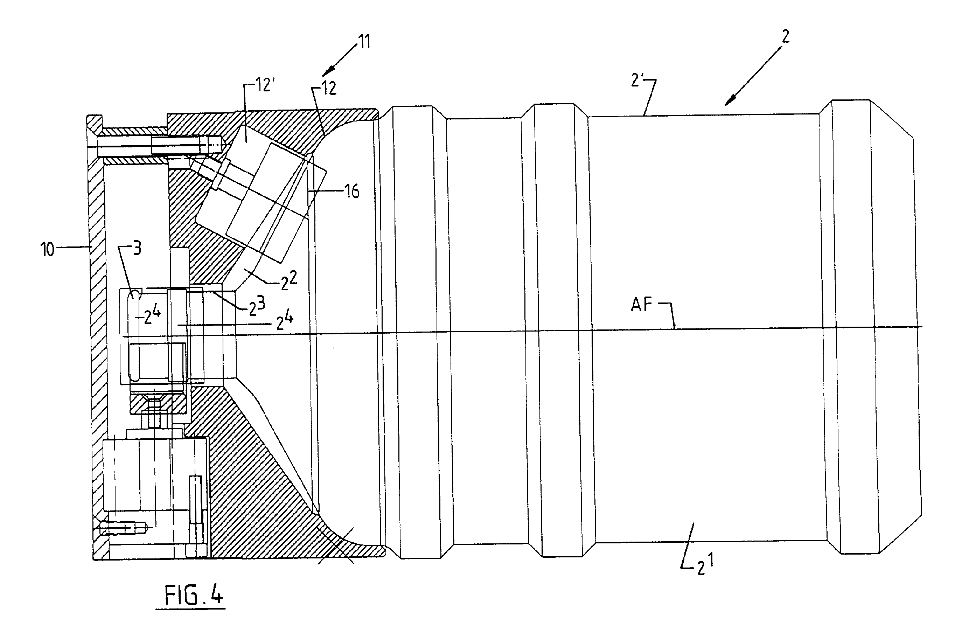

- Fig. 4: eine vergrößerte Einzeldarstellung und im Schnitt einen Greiferkopf des Greifers der Figuren 2 und 3, zusammen mit einer Wasserflasche;
- Fig. 5: in einer Darstellung ähnlich Figur 3 einen Greifer bei einer weiteren möglichen Ausführungsform der Erfindung.

Die in den Figuren allgemein mit 1 bezeichnete Vorrichtung dient zum Umsetzen von Fünf-Gallonen-Wasserflaschen 2, die aus glasklarem Kunststoff (PET) gefertigt und mit einem Mineral- oder Tafelwasser gefüllt sind. Die Flaschen 2 bestehen jeweils aus einem faßartig ausgebildeten Flaschenkörper 2¹, der an der Oberseite in eine Schulter 2² übergeht, die in der Mitte, d.h. im Bereich der Flaschenachse AF den die Flaschenöffnung bildenden Flaschenhals 2³ aufweist, der kreiszylinderförmig, die Flaschenachse AF konzentrisch umschließend ausgeführt ist. Die gefüllten Flaschen 2 sind an ihrer Flaschenöffnung durch einen vorzugsweise aus Kunststoff gefertigten Verschluß 3 verschlossen, der einen an der Flaschenöffnung am Flaschenhals 2³ gebildeten, die Achse AF konzentrisch bzw. ringartig umschließenden Wulst 2⁴ übergreift. Ein ähnlicher Wulst ist etwa in der Mitte des Flaschenhalses 2³ vorgesehen.

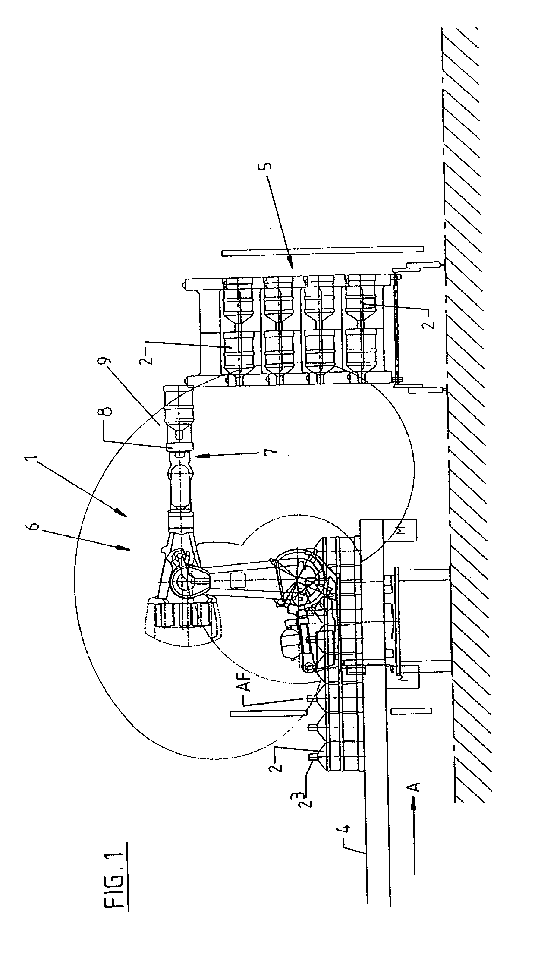

In der in der Figur 1 wiedergegebenen Ausführung dient die Vorrichtung 1 speziell zum Umsetzen der Flaschen 2 von einem ein Transportband aufweisenden Transporteur 4 in horizontale und in vertikaler Richtung übereinander angeordnete Aufnahmen eines regalartigen Transportgestells 5, welches auch als Rack bezeichnet wird. Die Flaschen 2 werden auf dem Transporteur 4 der Vorrichtung 1 aufrecht stehend, d.h. mit ihrer Achse AF in vertikaler Richtung orientiert und mit dem Flaschenhals 2³ nach oben weisend in der mit dem Pfeil A angegebenen Transportrichtung zugeführt. Die Flaschen 2 bilden hierbei eine geschlossene Reihe, in der die Flaschen 2 in Transportrichtung A dicht aneinander anschließen. In dem Transportgestell 5 sind die Flaschen 2 liegend, d.h. mit ihrer Achse AF in horizontaler Richtung orientiert angeordnet, und zwar in mehreren Etagen oder Lagen in vertikaler Richtung übereinander, wobei jede Lage bei der dargestellten Ausführungsform vier Flaschen 2 aufnimmt, die mit ihren Achsen AF in einer gemeinsamen horizontaler Ebene liegen und die jeweils zwei Flaschenpaare bilden, deren Flaschen 2 radial zu der Achse AF nebeneinander. Bei der für die Figur 1 gewählten Darstellung, in der die Flaschen 2 im Transportgestell 5 mit ihren Achsen AF parallel zur Zeichenebene dieser Figur orientiert sind, sind die Flaschen 2 jedes Flaschenpaares jeder Lage senkrecht zur Zeichenebene der Figur 1 hintereinander angeordnet. In jeder Lage liegt jede Flasche 2 eines Flaschenpaares achsgleich mit einer Flasche 2 des anderen Flaschenpaares.

Die Vorrichtung 1, mit der in jedem Arbeitsgang jeweils zwei Flaschen 2 vom Transporteur 4 abgenommen und als Flaschenpaar in das Transportgestell 5 bzw. in eine der dort gebildeten Aufnahmen eingesetzt werden, besteht im wesentlichen aus einem Roboter 6, der an dem freien Ende seines Roboterarms 7 bzw. an einem dortigen Geräteträger 8 mit einem Greifer 9 versehen ist. Durch eine nicht dargestellte, programmierbare elektrische Steuereinrichtung sind die Antriebe des Roboters 6 so gesteuert, daß der Greifer 9 die für das Umsetzen der Flaschen 2 von dem Transporteur 4 in das Transportgestell notwendigen Bewegungen ausführt, die im wesentlichen umfassen
- das Aufsetzen des Greifers 9 auf zwei auf dem Transporteur 4 stehende Flaschen 2,
- das Greifen dieser Flaschen 2,
- das Abheben der beiden Flaschen 2 von dem Transporteur 4,
- das Schwenken der beiden gegriffenen Flaschen 2 in eine horizontale Lage, in der die Achsen AF der am Greifer 9 gehaltenen Flaschen in einer gemeinsamen horizontalen Ebene liegen sowie
- das Einschieben oder Einlegen der Flaschen 2 in eine noch freie Aufnahme des Transportgestells 5.

Das Einsetzen der Flaschen 2 in jeder Lage des Transportgestells 5 erfolgt dabei beispielsweise so, daß zunächst das erste Paar von Flaschen 2 eingelegt wird, und daß dann beim Einbringen des zweiten Flaschenpaares in die selbe Ebene die Flaschen 2 des ersten Flaschenpaares zur Rückseite des Transportgestells 5 hin verschoben werden.

Die Steuerung der Bewegung des Roboters 6 bzw. des Greifers 9 erfolgt dabei vorzugsweise auch durch Überwachung mittels Sensoren, beispielsweise optoelektrischer Sensoren sowie mit einem Bilderkennungssystem unter Verwendung wenigstens einer Videokamera.

Wie dargestellt, werden die Flaschen 2 beim Umsetzen jeweils im Bereich ihrer Schulter 2² und ihres Flaschenhalses 2³ gegriffen und stehen mit ihrem Flaschenkörper 2¹ über die den Roboterarm 7 bzw. dem Geräteträger 8 abgewandte Vorderseite des Greifers 9 vor.

Zum Greifen der Flaschen 2 besitzt der Greifer 9 in einem Greifergehäuse 10 zwei Greiferköpfe 11. Jeder Greiferkopf 11 bildet an seiner dem Geräteträger 8 abgewandten Vorderseite eine zu dieser Vorderseite hin offene Aufnahme- oder Greiferöffnung 12, die trichterartig sich zur Rückseite des Greifers hin verengend an die Form der Flaschen 2 im Bereich ihrer Schultern 2² angepaßt ist und in der Mitte bzw. in der Achse AGK jedes Greiferkopfes 11 in eine Öffnung 13 übergeht, die zur Aufnahme des Flaschenhalses 2² der jeweiligen Flasche 2 dient. Jede von dem Greifer 9 bzw. einem Greiferkopf 11 gegriffene Flasche 2 ist also mit dem Bereich ihrer Flaschenschulter 2² in der Greiferöffnung 12 und mit ihrem Flaschenhals 2³ in der Verlängerung 13 dieser Öffnung aufgenommen und ist mit ihrer Achse AF achsgleich mit der Achse AGK angeordnet. Im Bereich der Verlängerung 13 ist jeder Greiferkopf 11 mit zwei Klemmbacken 14 versehen, die bei der dargestellten Ausführungsform jeweils die Form etwa eines halben Ringes aufweisen und durch ein pneumatisches Betätigungselement 15 aus einer nicht klemmenden Stellung mit einem größeren radialen Abstand von der Achse AGK des betreffenden Greiferkopfes 11 radial nach innen in eine klemmende Stellung bewegbar sind, in der die beiden Klemmbacken 14 mit ihrer konzentrisch zur Achse AGK verlaufenden, konkav gekrümmten Klemmfläche gegen den Hals 2² bzw. gegen die dortigen Ringwülste 2⁴ der betreffenden Flasche 2 anliegen und diese festklemmen. Wie die Figuren zeigen, ist für jede Klemmbacke 14 ein eigenes Betätigungselement 15 (z.B. Pneumatikzylinder) vorgesehen, wobei diese Betätigungselemente parallel angesteuert werden, so daß ein gleichmäßiges Festklemmen der jeweiligen Flasche 2 an ihrem Flaschenhals 23 erreicht ist. Die Klemmbacken 14 sind beidseitig von einer Mittelebene M des Greifers 9 vorgesehen, in der (Mittelebene) auch die beiden Achsen AGK der Greiferköpfe 11 sowie auch die Achse AG des Greifers 9 angeordnet sind, die (Achse AG) parallel zu den beiden Achsen AGK und in der Mitte zwischen diesen verläuft.

In der Greiferkopföffnung 12 sind um die Achse AGK verteilt mehrere Balgensauger 16 vorgesehen, und zwar in einem gleichen Abstand von der jeweiligen Achse AGK derart, daß beim Greifen einer Flasche 2 diese Balgensauger 16 mit ihrer offenen Seite gegen die Außenfläche der Schulter 2² anliegen. Beim Greifen einer Flasche 2 werden die Balgensauger 16 gesteuert mit einer Unterdruckquelle verbunden, so daß sich diese dann an der Schulter 2² der jeweils gegriffenen Flasche 2 festsaugen. Die Flasche 2 ist also an dem jeweiligen Greiferkopf 11 durch Festklemmen zwischen den Klemmbacken 14 im Bereich ihres Flaschenhalses 2³ sowie durch die Balgensauger 16 durch Unterdruck oder Vakuum an der Schulter 2² gehalten und stützt sich in der Öffnung 12 ab. Trotz ihres hohen Gewichtes können somit die gefüllten Flaschen 2 ohne zusätzliche, vom Greifer 9 wegstehende Abstützelemente beim Umsetzen in die horizontale Lage geschwenkt und in dieser Orientierung in das Transportgestell 5 eingesetzt werden, und zwar auch ohne die Gefahr eines Bruchs der Flaschen 2.

Wie die Figuren auch zeigen, bildet die Greiferkopföffnung 12 Ausnehmungen 12', in denen der jeweilige Balgensauger 16 angeordnet ist, so daß diese Sauger, die zumindest bei nicht vorhandener Flasche 2 mit ihren offenen Enden aus der Ausnehmung 12' vorstehen, beim Greifen einer Flasche 2 zumindest teilweise in die jeweilige Ausnehmung 12' ausweichen können. Hierdurch wird nicht nur ein optimaler Sitz des jeweiligen Balgensaugers 16 an der Flasche 2 erreicht, sondern auch eine Beschädigung der Balgensauger 16 beim Greifen der Flaschen 2 wirksam verhindert.

Vorstehend wurde davon ausgegangen, daß mit dem Greifer 9 in jedem Arbeitsgang jeweils zwei Flaschen 2 umgesetzt, d.h. vom Transporteur 4 in das Transportgestell 5 eingesetzt werden, wobei die Aufnahmen dieses Transportgestell so ausgebildet sind, daß die Flaschen 2 jedes Flaschenpaares im Transportgestell 5 im Bereich ihrer Umfangsfläche gegeneinander anliegen.

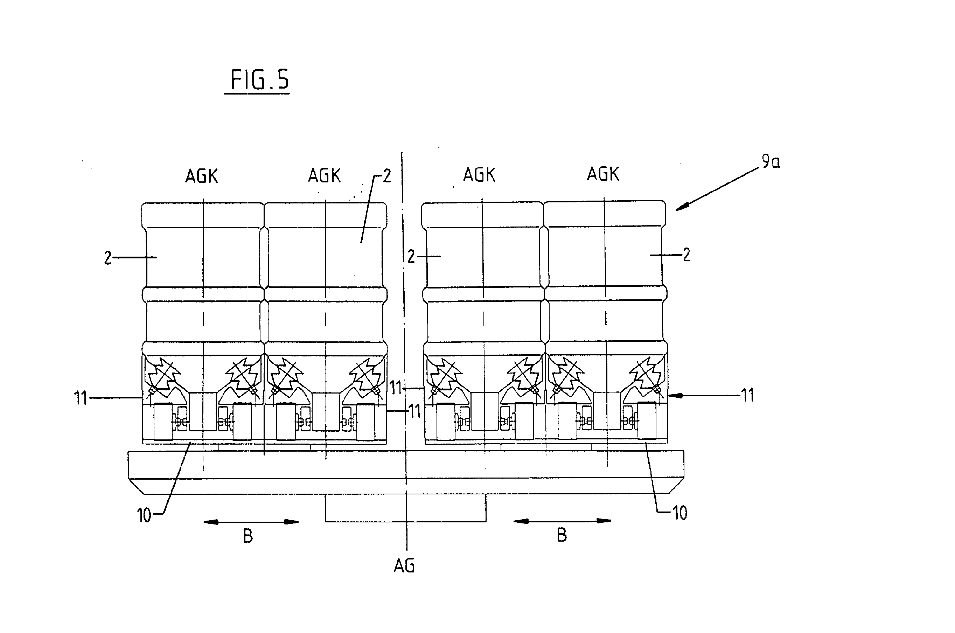

Die Figur 5 zeigt in vereinfachter Darstellung eine Ausführung eines Greifers 9a, der insgesamt vier Greiferköpfe 11 bildet, und zwar jeweils zwei Greiferköpfe 11 an einem Gehäuse 10. Die beiden Gehäuse 10 sind an der Rückseite des Greifers 9a an einem Tragrahmen 17 vorgesehen, der mit seiner Längserstreckung in der von den Achsen AGK sämtlicher Greiferköpfe 11 gebildeten gemeinsamen Ebene liegt.

Durch ein nicht dargestelltes Stellglied, beispielsweise durch einen Pneumatik-Zylinder sind die beiden Gehäuse 10 bzw. die beiden Gruppen von Greiferköpfen 11 (wie dies mit dem Doppelpfeil B angedeutet ist) in Längsrichtung des Trägers 17 zwischen einer ersten Stellung, in der die der Greiferachse AG benachbarten Greiferköpfe 11 der beiden Greiferkopfgruppen einen Abstand voneinander aufweisen, wie dies in der Figur 5 dargestellt ist (erster Zustand), und einer Stellung bewegbar, in der auch die der Achse AG benachbarten innen liegenden Greiferköpfe 11 der beiden Greiferkopfgruppen unmittelbar aneinander anschließen (zweiter Zustand), ist. Der Greifer 9a ermöglicht das gleichzeitige Umsetzen von vier Flaschen 2. Zum Greifen der auf dem Transporteur 4 stehenden Flaschen befindet sich dabei der Greifer 9a in dem zweiten Zustand. Beim Einsetzen in das Transportgestell befindet sich der Greifer 9a in dem ersten Zustand, bei dem die beiden Gruppen von Greiferköpfen 11 voneinander beabstandet sind, so daß ein Einsetzen der vier Flaschen 2 in zwei unmittelbar aneinander anschließend angeordnete Transportgestelle 5 möglich ist, und zwar jeweils zwei Flaschen 2 in ein Transportgestell 5 und zwei Flaschen 2 in das andere Transportgestell 5, selbstverständlich jeweils auf dem gleichen Niveau.

Der Greifer 9a gestattet selbstverständlich auch das gleichzeitige Einbringen von vier Flaschen 2 in ein Transportgestell, welches zur Erzielung der notwendigen Festigkeit in der Mitte eine vertikale Verstrebung aufweist und bei dem in jeder Lage beidseitig von dieser mittleren, vertikalen Verstrebung Flaschenpaare angeordnet sind.

So ist es beispielsweise auch möglich, die beschriebene Vorrichtung auch für ein anderen Umsetzen der Flaschen 2 zu verwenden, beispielsweise aus einem Transportoder Lagergestell auf einem Transporteur usw.

Die Erfindung wurde voranstehend an Ausführungsbeispielen beschrieben. Es versteht sich, daß zahlreiche Änderungen sowie Abwandlungen möglich sind, ohne daß dadurch der der Erfindung zugrundeliegende Erfindungsgedanke verlassen wird.

### Bezugszeichenliste

- 1: Vorrichtung
- 2: Flasche
- 21: Flaschenkörper
- 22: Flaschenschulter
- 23: Flaschenhals
- 24: Versteifungswulst
- 3: Verschluß
- 4: Transporteur
- 5: Transport- und/oder Lagergestell
- 6: Roboter
- 7: Roboterarm
- 8: Geräteträger
- 9, 9a: Greifer
- 10: Greifergehäuse
- 11: Greiferkopf
- 12: Greiferkopföffnung
- 12': Ausnehmung
- 13: Verlängerung
- 14: Klemmbacken
- 15: Betätigungselement
- 16: Balgensauger
- 17: Träger
- A: Transportrichtung
- B: Verstellbewegung
- AG: Greiferachse
- AG K: Greiferkopfachse
- AF: Flaschenhochachse
- M: Mittelebene

## Patentansprüche

1. Greifer für eine Vorrichtung zum Umsetzen von großvolumigen, mit einem flüssigen Füllgut gefüllten Flaschen (2), vorzugsweise Fünf-Gallonen-Flaschen, **gekennzeichnet durch** wenigstens einen Greiferkopf (11) mit einer zu einer Vorderseite des Greifers (9, 9a) sich öffnenden Greiferkopföffnung (12), mit einer Klemmvorrichtung (14, 15) zum Festklemmen jeweils einer Flasche (2) an einem Flaschenhals (2³), sowie mit wenigstens einem radial gegenüber einer Greiferkopfachse (AGK) versetzt angeordneten elastischen und mit Unterdruck beaufschlagbaren Sauger oder Vakuumhalter (16) in der Greiferkopföffnung (12) zum Halten der jeweiligen Flasche (2) an der Flaschenschulter (2²).

2. Greifer nach Anspruch 1, **dadurch gekennzeichnet, daß** um die Greiferkopfachse (AGK) verteilt mehrere Vakuumhalter (16) vorgesehen sind.

3. Greifer nach Anspruch 1 oder 2, **dadurch gekennzeichnet, daß** der wenigstens eine Vakuumsauger oder -halter ein Balgensauger (16) ist.

4. Greifer nach einem der vorhergehenden Ansprüche, **dadurch gekennzeichnet, daß** die Klemmvorrichtung wenigstens zwei beidseitig von der Greiferkopfachse (AGK) angeordnete Klemmbacken (14) aufweist.

5. Greifer nach einem der vorhergehenden Ansprüche, **dadurch gekennzeichnet, daß** die Klemmvorrichtung (14, 15) pneumatisch betätigbar ist.

6. Greifer nach einem der vorhergehenden Ansprüche, **dadurch gekennzeichnet, daß** die Greiferkopföffnung (12) an die Form der Flaschenschulter (2²) angepaßt sich trichterartig zur Greiferkopfachse (AGK) verengend ausgebildet ist.

7. Greifer nach einem der vorhergehenden Ansprüche, **dadurch gekennzeichnet, daß** die Greiferkopföffnung (12) wenigstens eine Abstützfläche für die Schulter (2²) der jeweiligen Flasche (2) bildet.

8. Greifer nach einem der vorhergehenden Ansprüche, **dadurch gekennzeichnet, daß** der wenigstens eine Vakuumhalter (16) im Bereich einer Ausnehmung oder Erweiterung (12') der Greiferkopföffnung (12) vorgesehen ist.

9. Greifer nach einem der vorhergehenden Ansprüche, **gekennzeichnet durch** wenigstens zwei Greiferköpfe (11) oder wenigstens zwei Gruppen von Greiferköpfen (11),
wobei beispielsweise die Greiferköpfe (11) oder Greiferkopfgruppen in einer Achsrichtung senkrecht zu den Greiferkopfachsen (AGK) an einem Träger (17) beweglich vorgesehen sind.

10. Vorrichtung zum Umsetzen von großvolumigen, mit einem flüssigen Füllgut gefüllten Flaschen, insbesondere Fünf-Gallonen-Flaschen, **gekennzeichnet durch** einen Roboter (6) und einen an einem Arm (7) des Roboters (6) vorgesehenen Greifer (9, 9a) nach einem der vorhergehenden Ansprüche.
